# EUROPEAN PATENT APPLICATION

(11) **EP 2 731 216 A1**
(43) Date of publication of application: **14.05.2014**
(21) Application number: 11869120.3
(22) Date of filing: 07.07.2011
(51) Int. Cl.: H02G 11/02, B60L 11/18, B65H 75/38, H01M 10/46, H02J 7/00

(54) **CHARGING CABLE HOUSING DEVICE**

(71) Applicant: TOYOTA JIDOSHA KABUSHIKI KAISHA, Toyota-shi, Aichi-ken, 471-8571 (JP)
(72) Inventor: KINOMURA, Shigeki, Toyota-shi Aichi 471-8571 (JP); ONO, Tomoya, Toyota-shi Aichi 471-8571 (JP)
(74) Representative: Winter, Brandl, Fürniss, Hübner, Röss, Kaiser, Polte - Partnerschaft
(86) International application number: PCT/JP2011/065541
(87) International publication number: WO 2013/005326

(57) **Abstract**

A charging cable housing device includes: a charging connector (150); a casing (101) having an internal space (101A) and extending along a top-bottom direction; a charging cable (160) housed in the internal space (101A) of the casing (101), and having one end which is extended outward from an opening (120H) provided in the casing (101) and to which the charging connector (150) is connected, and the other end from which electric power is supplied; and a cable reel (210) housed in the internal space (101A) of the casing (101) and located lower than the opening (120H), with the other end of the charging cable (160) wound up around the cable reel.

## Description

### TECHNICAL FIELD

The present invention relates to a charging cable housing device.

### BACKGROUND ART

In recent years, vehicles in which electric power stored in a battery is used as motive power for drive wheels for the sake of environmental friendliness have been of interest. In particular, vehicles mounted with a drive battery such as plug-in hybrid vehicle and electric vehicle have been in the limelight. A vehicle of this type has an inlet which is used for charging and to which a charging connector mounted on an external charging facility can be connected.

With the increasing interest given to these vehicles, development of a charging cable housing device having the charging connector is now in progress.

Japanese Patent Laying-Open No. 8-33121 (PTD 1) discloses a charging device adapted to an electric vehicle, and the charging device includes an operation box connected to a power supply cable, a charging cable connected to the power supply cable through this operation box, a charging connector which is connected to a leading end of the charging cable and connectable to a vehicle's connector, and a charging cable housing device in which the charging cable is housed.

This charging cable housing device is a reel-type housing device in which the charging cable is wound up and housed therein. For charging, the charging cable is pulled out from the charging cable housing device.

Japanese Utility Model Registration No. 3120547 (PTD 2) discloses a stand-type power supply tap including a power supply tap provided on the upper end of an extendable pole, and an extension cord is mounted on the lower end of the pole.

Japanese Patent Laying-Open No. 11-122714 (PTD 3) discloses a charging device adapted to an electric vehicle, and the charging device includes a connector housing which is placed on a sidewall of a pole having its lower end fixed on a mount surface and on which a charging connector is mounted, and a cable connected to the charging connector is housed inside a cable housing cage provided along the outer circumferential surface of the pole.

### CITATION LIST

### PATENT DOCUMENT

PTD 1: Japanese Patent Laying-Open No. 8-33121
PTD 2: Japanese Utility Model Registration No. 3120547
PTD 3: Japanese Patent Laying-Open No. 11-122714

### SUMMARY OF INVENTION

### TECHNICAL PROBLEM

With the spread of the vehicles of the above-described type, there arises an urgent need to develop a charging cable housing device. In terms of user's ease of use, it is preferable that the charging cable housing device is portable. Further, for the sake of user's ease of use, a charging connector should be positioned at a certain height of the charging cable housing device. In this case, it is desired that the charging cable housing device is structured so that it is unlikely to fall down while a cable is being pulled out. This challenge is common not only to the vehicles but also to devices to be charged that need charging.

Accordingly, the present invention has been made to solve the above challenge, and an object of the present invention is to provide a charging cable housing device having an easy-to-use structure for use by a user.

### SOLUTION TO PROBLEM

A charging cable housing device according to the present invention is configured to be portable and used for supplying electric power to a device-to-be-charged, and the charging cable housing device includes: a charging connector to be mounted in an inlet provided in the device-to-be-charged; a casing having an internal space and extending along a top-bottom direction; a charging cable housed in the internal space of the casing, and having one end which is extended outward from an opening provided in the casing and to which the charging connector is connected, and the other end from which electric power is supplied; and a cable reel housed in the internal space of the casing and located lower than the opening, with the other end of the charging cable wound up around the cable reel.

In another embodiment, the casing has an upper region where the opening is provided and a lower region where the cable reel is provided, and the lower region has an outer shape configured to extend outward relative to an outer shape of the upper region.

In still another embodiment, the casing has a cylindrical shape, and the lower region has an outer diameter larger than an outer diameter of the upper region.

In a further embodiment, the charging cable housing device further includes a cable conveyor provided in the internal space of the casing and located higher than the cable reel and causes the charging cable to be fed or wound up.

In a further embodiment, a cable routing roller is provided between the opening and the cable reel and causes a tension to be generated on the charging cable extended from the cable reel.

In a further embodiment, a mount region on which the charging connector is mounted is provided at a top of the casing.

In a further embodiment, a foreign-matter discharge region in which foreign matters having entered the internal space are collected and from which the foreign matters are discharged outside is provided in a bottom end of the casing.

### ADVANTAGEOUS EFFECTS OF INVENTION

In accordance with the charging cable housing device of the present invention, a charging cable housing device having an easy-to-use structure for use by a user can be provided.

### BRIEF DESCRIPTION OF DRAWINGS

Fig. 1 is a perspective view showing an external configuration of a charging cable housing device of an embodiment.
Fig. 2 is a front view of the charging cable housing device of an embodiment.
Fig. 3 is a left side view of the charging cable housing device of an embodiment.
Fig. 4 is a diagram showing how the charging cable housing device of an embodiment is used.
Fig. 5 is a cross-sectional view along a line V-V as seen in the direction of the arrows in Fig. 4.
Fig. 6 is a diagram showing an electric power feeding path during use of the charging cable housing device of an embodiment.
Fig. 7 is a diagram showing an electric power feeding path in the charging cable housing device of an embodiment.
Fig. 8 is a front view of a cable feeding device employed for the charging cable housing device of an embodiment.
Fig. 9 is a diagram as seen in the direction of an arrow IX in Fig. 8.
Fig. 10 is a diagram showing a form of a cable routing roller employed for the charging cable housing device of an embodiment.
Fig. 11 is a diagram along a line XI-XI as seen in the direction of the arrows in Fig. 10.
Fig. 12 is a block diagram illustrating an operation for pulling out a cable by the charging cable housing device of an embodiment.
Fig. 13 is a block diagram illustrating an operation for winding up a cable by the charging cable housing device of an embodiment.

### DESCRIPTION OF EMBODIMENTS

A charging cable housing device in an embodiment of the present invention will hereinafter be described with reference to the drawings. In each embodiment below, the number, the quantity and the like as mentioned are those to which the scope of the present invention is not necessarily limited, unless otherwise noted. The components identical or corresponding to each other will be denoted by the same reference numerals, and a description thereof may not be repeated depending on the case. It has originally been intended that features of the embodiments are used in combination as appropriate.

### Charging Cable Housing Device 100

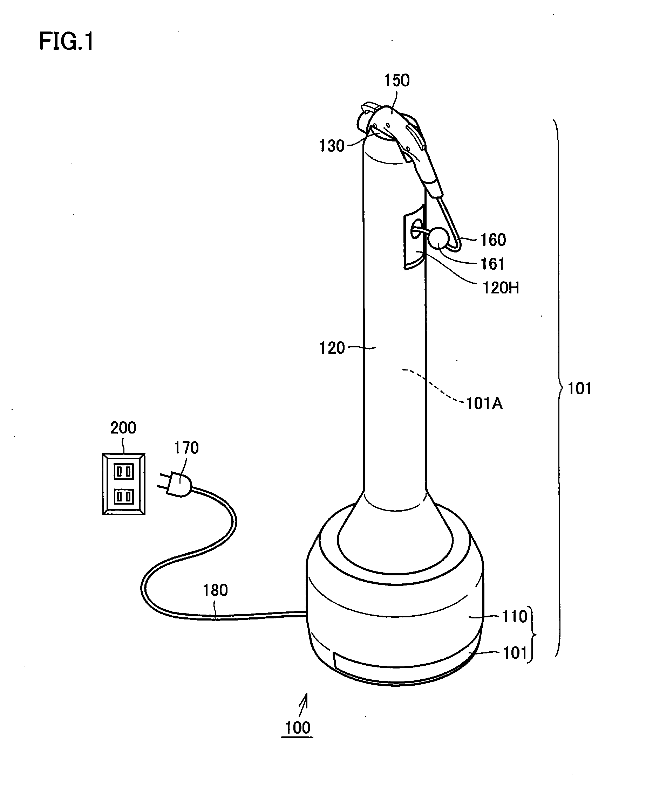

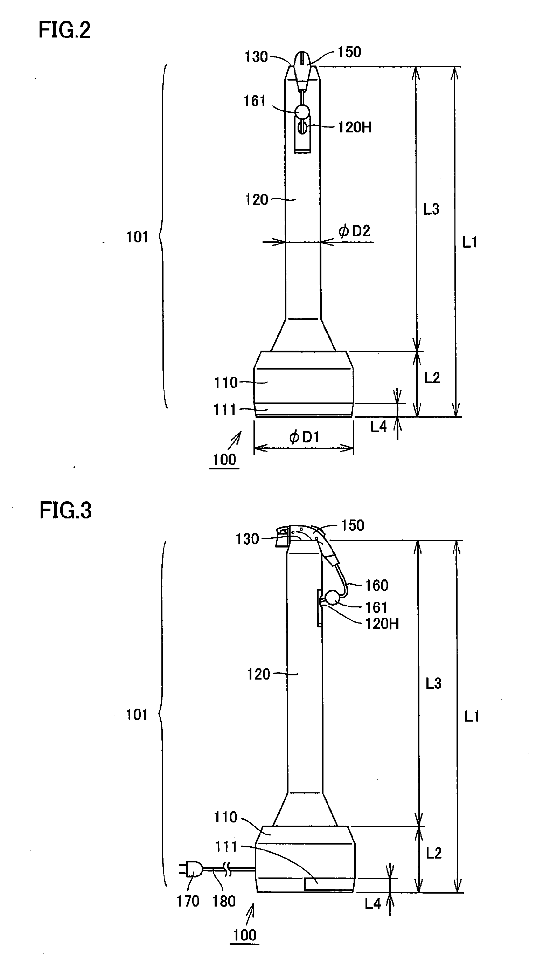

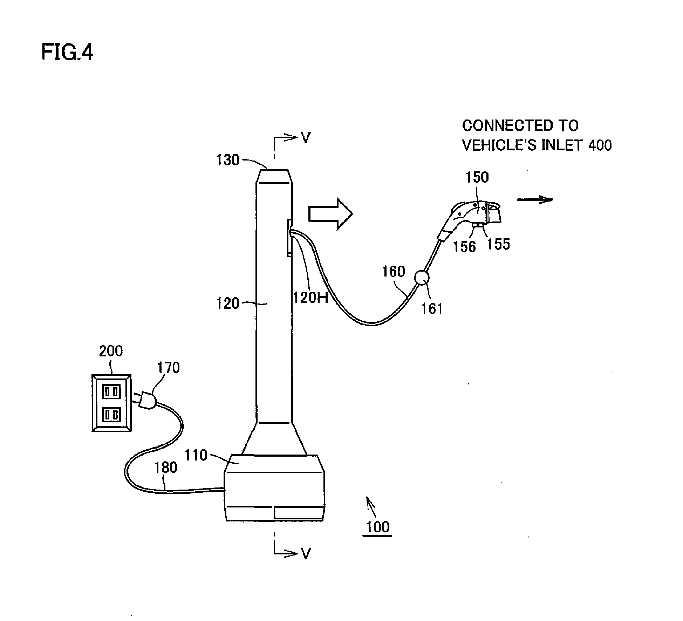

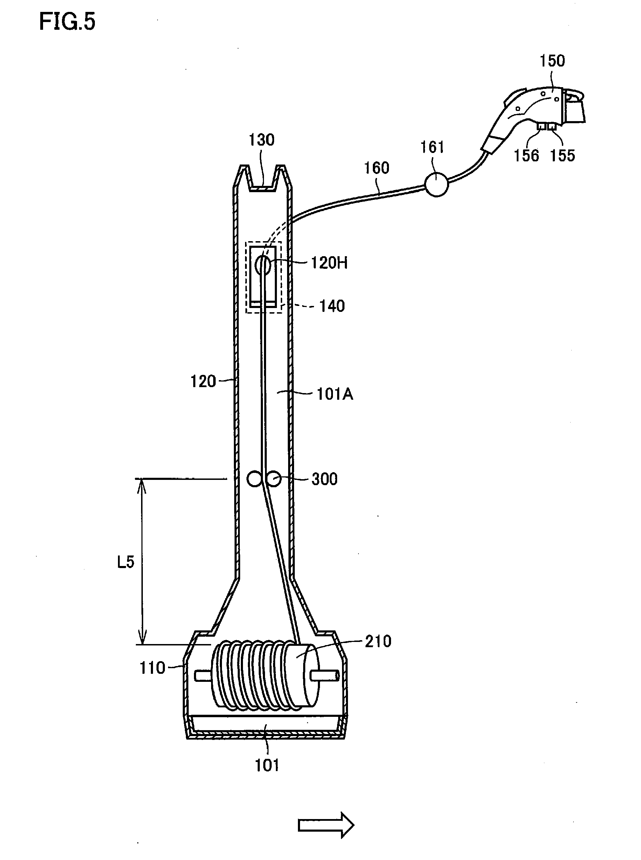

With reference to Figs. 1 to 5, a structure of a charging cable housing device 100 in the present embodiment will be described. Fig. 1 is a perspective view showing an external configuration of charging cable housing device 100, Fig. 2 is a front view of charging cable housing device 100, Fig. 3 is a left side view of charging cable housing device 100, Fig. 4 is a diagram showing how charging cable housing device 100 is used, and Fig. 5 is a cross-sectional view along a line V-V as seen in the direction of the arrows in Fig. 4.

This charging cable housing device 100 is a device used for charging a battery which is a device to be charged such as plug-in hybrid vehicle or electric vehicle, by means of a household power supply. Charging cable housing device 100 is not configured to be fixed on a mount surface but configured to be portable to a position convenient for a user to use the housing device.

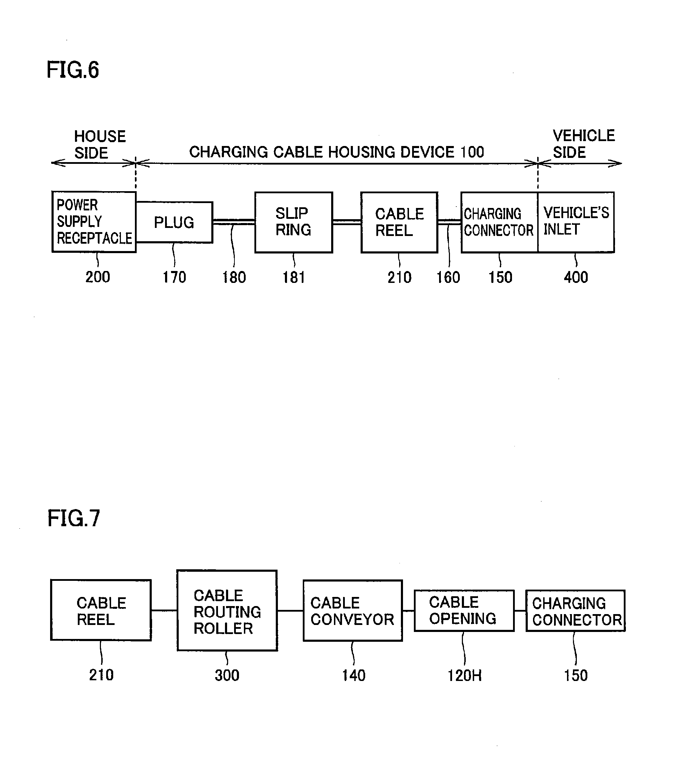

Charging cable housing device 100 includes a charging connector 150 removably mounted in an inlet 400 (see Fig. 6) provided in a vehicle, a casing 101 having an internal space 101 A and extending along a top-bottom direction, a charging cable 160 housed in internal space 101A of casing 101, and having one end which is extended outward from an opening 120H provided in casing 101 and to which charging connector 150 is connected on the outside, and the other end from which electric power is supplied, and a cable reel 210 housed in internal space 101A of casing 101 and located lower than opening 120H, with the other end of charging cable 160 wound up around the cable reel.

As cable reel 210, a rotational reel having a ratchet mechanism and a wind-up spring mechanism may be used. When charging cable 160 is to be wound up around cable reel 210, the wind-up spring mechanism is used to rotate the rotational reel and thereby cause charging cable 160 to be wound up around the body of the rotational reel.

In contrast, when charging cable 160 is to be pulled out, the ratchet mechanism causes the cable to be pulled out. While the cable is temporarily stopped from being pulled out, the state where the ratchet mechanism stops the rotational reel from winding back the cable may be selected. The state of stoppage caused by the ratchet mechanism may be released to make it possible to further pull out charging cable 160 or wind up charging cable 160.

Charging cable housing device 100 of the present embodiment has a mount region 130 which is located at the top of casing 101 and on which charging connector 150 is to be mounted. Mount region 130 has a concave shape for receiving charging connector 150.

Casing 101 has its height (L1) set to about 600 mm to about 1000 mm for the sake of facilitating operation of charging connector 150, and the height is set in the present embodiment to about 700 mm.

On charging cable 160 extended outward from opening 120H, a stopper ball 161 is mounted for preventing charging cable 160 from being excessively wound up.

From the lower end of casing 101, an external cable 180 having one end to which a plug 170 is coupled is drawn out. Plug 170 can be coupled to a household power supply receptacle 200 to thereby receive externally supplied electric power. The other end of external cable 180 is electrically connected through a slip ring 181 (see Fig. 6) to charging cable 160 wound up around cable reel 210.

Casing 101 has an upper region 120 where opening 120H is provided and a lower region 110 where cable reel 210 is provided. In the present embodiment, under the condition that the total length L1 of casing 101 is about 700 mm, upper region 120 has a length L3 of about 450 mm and lower region 110 has a length L2 of about 250 mm.

As to casing 101 of the present embodiment, lower region 110 has an outer shape configured to extend outward relative to an outer shape of upper region 120. Specifically, casing 101 as a whole has a cylindrical shape, the outer diameter (diameter φD1) of lower region 110 is set to about 300 mm to about 400 mm, and the outer diameter (diameter φD2) of upper region 120 is set to about 100 mm to about 200 mm.

Thus, the outer shape of lower region 110 can be configured to extend outward relative to the outer shape of upper region 120 to thereby make stable the state in which charging cable housing device 100 is placed. It should be noted that the outer shape of lower region 110 and the outer shape of upper region 120 are not limited to a circular shape and may also be a rectangular shape. The rectangular shape and the circular shape may be combined as appropriate.

Casing 101 of the present embodiment has, in its bottom end of lower region 110, a foreign-matter discharge region 111 in which foreign matters (dead leaves, dust, and the like) having entered internal space 101 A from opening 120H, for example, are collected and from which they are discharged. As this foreign-matter discharge region 111, a tray is used, and the tray is configured so that it can be pulled out from the outside. Thus, the tray can regularly be pulled out so that the inside of internal space 101A can easily be cleaned.

In internal space 101A of casing 101 of the present embodiment, preferably a cable conveyor 140 is provided higher than cable reel 210 placed in lower region 110, so that cable conveyor 140 is located in a nearby region (the region enclosed by the chain line in Fig. 5) of opening 120H, and causes charging cable 160 to be fed or wound up.

Although cable conveyor 140 is not necessarily a requisite component, it is preferable to provide cable conveyor 140 so that it is easy for a user to perform an operation of pulling out charging cable 160 and an operation of winding up charging cable 160. This cable conveyor 140 will be described in detail later herein.

In internal space 101A of casing 101 in the present embodiment, a cable routing roller 300 is provided between opening 120H and cable reel 210, for causing a tension to be generated on charging cable 160 extended from cable reel 210. In the present embodiment, the rotational center of cable routing roller 300 is located at the position of a distance L5 (about 300 mm) from the upper surface of cable reel 210.

The tension can be generated on charging cable 160 extended from cable reel 210 to thereby prevent occurrence of a failure in winding up charging cable 160 around cable reel 210, due to slack of charging cable 160 while being pulled out from cable reel 210 and while being wound up around cable reel 210.

Although cable routing roller 300 is not necessarily a requisite component, it is preferable to provide cable routing roller 300 so that charging cable 160 is smoothly pulled out and wound up and so that a failure in winding up charging cable 160 around cable reel 210 is prevented.

### Electric Power Feeding Path during Use of Charging Cable Housing Device 100

Here, with reference to Figs. 6 and 7, a description will be given of an electric power feeding path during use of charging cable housing device 100 as well as an electric power feeding path in charging cable housing device 100. As shown in Fig. 6, as plug 170 is mounted in household power supply receptacle 200, electric power is supplied from external cable 180 through slip ring 181 to charging cable 160 wound up around cable reel 210. As charging connector 150 provided on the leading end of charging cable 160 is connected to inlet 400 provided in a vehicle, the electric power is supplied to a battery which is a device-to-be-charged in the vehicle.

As to the electric power feeding path in charging cable housing device 100, charging cable 160 is pulled out from cable reel 210 to extend through cable routing roller 300, cable conveyor 140, and opening 120H. The electric power is supplied from charging connector 150 which is provided on the leading end of charging cable 160 as described above, to the battery which is a device-to-be-charged in the vehicle, through inlet 400 provided in the vehicle.

### Cable Conveyor 140

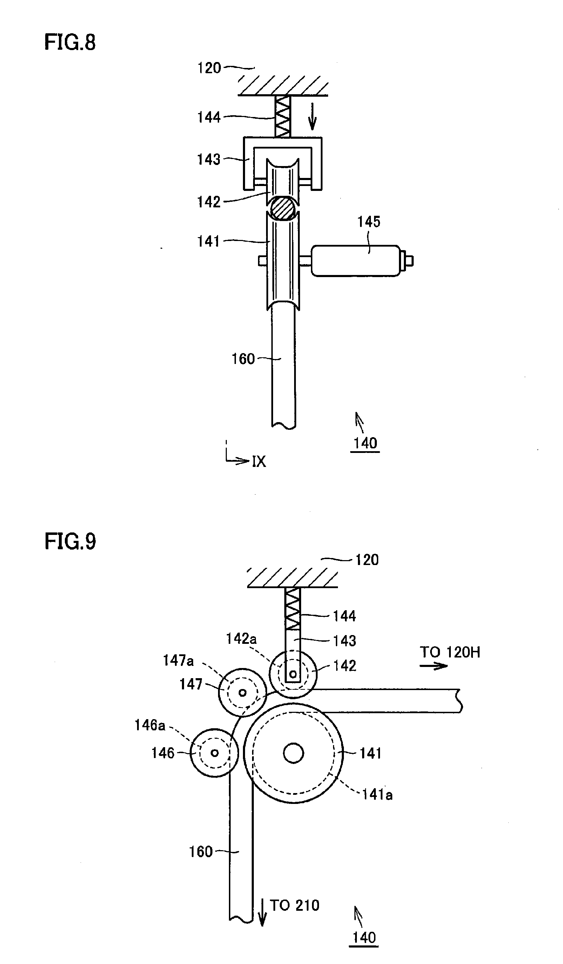

Referring next to Figs. 8 and 9, a configuration of cable conveyor 140 employed for the present embodiment will be described. Fig. 8 is a front view (seen from opening 120H) of cable conveyor 140, and Fig. 9 is a diagram as seen in the direction of an arrow IX in Fig. 8. This cable conveyor 140 also has a function of diverting, toward opening 120H, the route of charging cable 160 pulled out from cable reel 210.

There are provided a drive cable feed pulley 141, a cable catch tensioning pulley 142, a first guide pulley 146, and a second guide pulley 147. Drive cable feed pulley 141 has a largest size among these pulleys and diverts the route of charging cable 160 from cable reel 210 toward opening 120H. Cable catch tensioning pulley 142, first guide pulley 146, and second guide pulley 147 are arranged to catch charging cable 160 between these pulleys and drive cable feed pulley 141.

Cable catch tensioning pulley 142 is mounted with a forcing guide 143 for forcing cable catch tensioning pulley 142 against cable feed pulley 141, as well as a catch tension keeping spring 144. Catch tension keeping spring 144 has the other end fixed to upper region 120 of casing 101.

Thus, charging cable 160 is firmly caught between drive cable feed pulley 141 and cable catch tensioning pulley 142, and accordingly charging cable 160 is prevented from slipping between drive cable feed pulley 141 and cable catch tensioning pulley 142. It should be noted that drive cable feed pulley 141, cable catch tensioning pulley 142, and first guide pulley 146 have respective rotational shafts fixed to a fixation portion (not shown).

The rotation of drive cable feed pulley 141 is controlled by a drive motor 145, so that the rotation is made in the direction of feeding charging cable 160 or in the direction of winding up charging cable 160. It should be noted that drive of drive motor 145 is controlled by a pull-out switch 155 or a wind-up switch 156 provided on charging connector 150.

### Cable Routing Roller 300

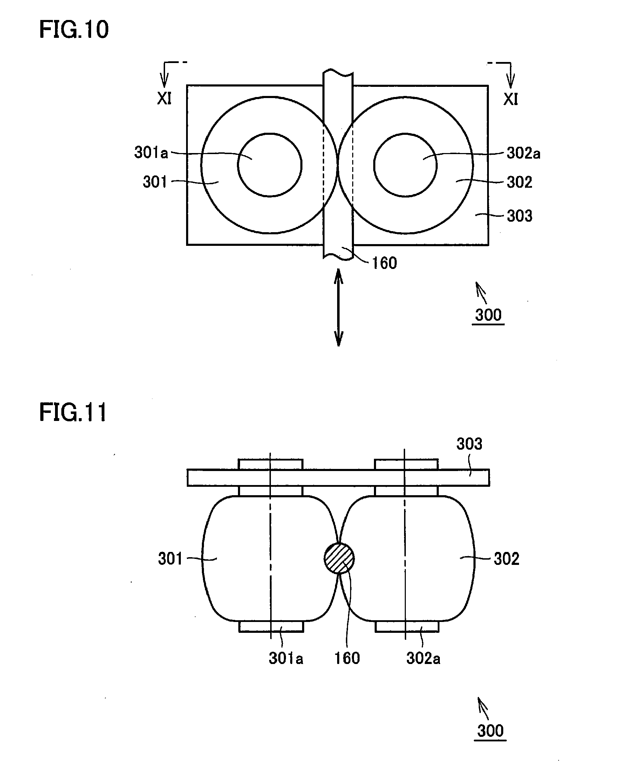

Referring next to Figs. 10 and 11, a structure of cable routing roller 300 will be described. Cable routing roller 300 has a pair of rollers 301 and 302 laterally catching charging cable 160 therebetween. Roller 301 has a rotational shaft 301a and a hollow rubber roller body 301b. Likewise, roller 302 has a rotational shaft 302a and a hollow rubber roller body 302b. Rotational shafts 301a and 302a are rotatably secured to a base plate 303.

Rubber roller bodies 301a and 302b are each made of rubber and each have a hollow shape in which a predetermined air pressure is kept. Rubber roller bodies 301a and 302b catch charging cable 160 therebetween so that the entire surface of charging cable 160 is covered with the surfaces of rubber roller bodies 301a and 302b. Rubber roller bodies 301a and 302b rotate with respective surfaces contacting each other.

Thus, charging cable 160 is conveyed in the direction of pulling out the cable or in the direction of winding up the cable while a large rotational force is generated between charging cable 160 and rubber roller bodies 301a, 302b. Accordingly, when charging cable 160 is pulled out from cable reel 210 and when charging cable 160 is wound up around cable reel 210 while a tension is generated on charging cable 160 extended from cable reel 210, occurrence of a failure in winding up charging cable 160 around cable reel 210 due to slack of charging cable 160 can be prevented.

While the present embodiment has been described in connection with the case where rollers 301, 302 for which hollow rubber rollers are used are employed for cable routing roller 300, pulleys as shown in Figs. 8 and 9 for example may also be used.

In addition, while it has been described that drive cable feed pulley 141, cable catch tensioning pulley 142, first guide pulley 146, and second guide pulley 147 are used for cable conveyor 140, a roller for which a hollow rubber roller is used as shown in Figs. 10 and 11 may also be employed instead of each pulley.

### Operation for pulling out cable/Operation for winding up cable

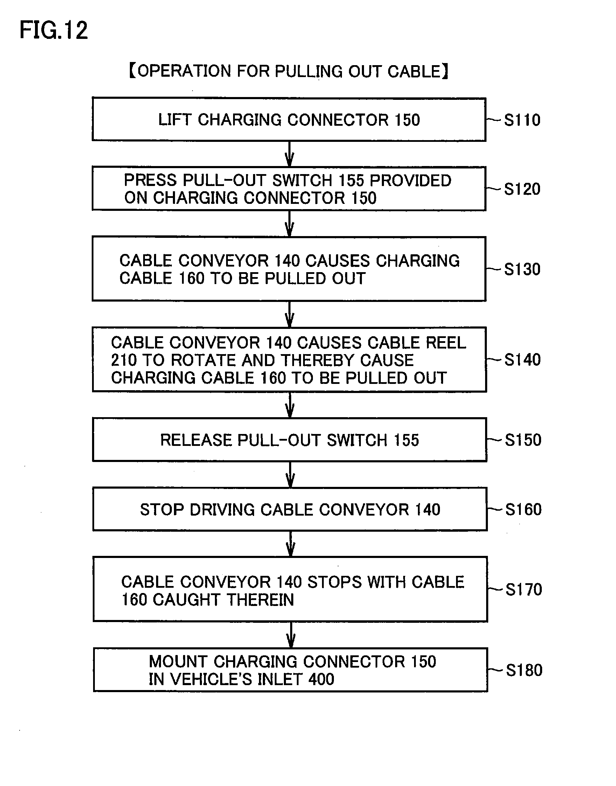

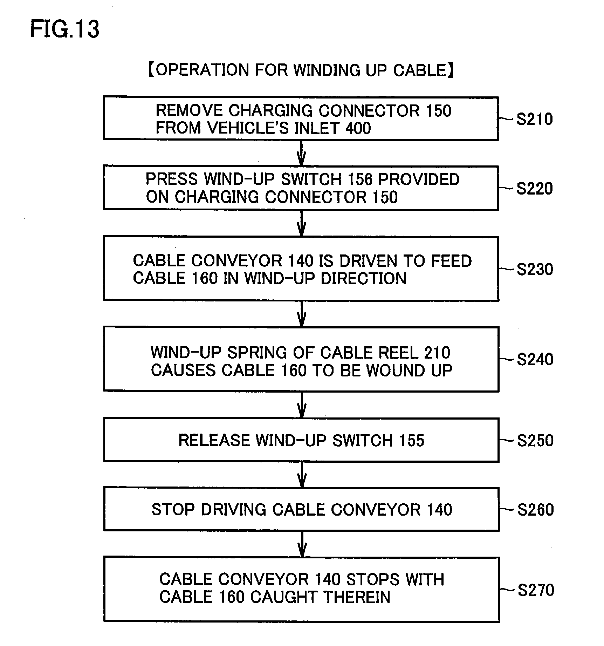

Referring next to Figs. 12 and 13, a description will be given of an operation for pulling out the cable and an operation for winding up the cable in the case where charging cable housing device 100 having the above-described configuration is used. Fig. 12 is a block diagram illustrating an operation for pulling out the cable by charging cable housing device 100 and Fig. 13 is a block diagram illustrating an operation for winding up the cable by charging cable housing device 100.

### Operation for pulling out cable

Referring to Fig. 12, regarding the operation for pulling out the cable, a user first lifts charging connector 150 (S110). Next, the user presses pull-out switch 155 provided on charging connector 150 (S120). Cable conveyor 140 is then driven to cause charging cable 160 to start being pulled out (S130). For charging cable 160 to be pulled out, cable conveyor 140 pulls out charging cable 160 with a stronger torque than a wind-up spring installed in cable reel 210.

Cable conveyor 140 pulls charging cable 160 in casing 101, and cable reel 210 rotates to cause charging cable 160 to be pulled out (S 140). When charging cable 160 is pulled out of the casing by a desired length, pull-out switch 155 is released (S150), and cable conveyor 140 is stopped (S160).

Under the condition that cable conveyor 140 is stopped, charging cable 160 is caught between drive cable feed pulley 141 and cable catch tensioning pulley 142 and thus firmly held therebetween (S 170). Thus, charging cable 160 does not move.

The user mounts charging connector 150 in vehicle's inlet 400 (S 180). Thus, a state where supply of electric power to the vehicle is started is reached.

### Operation for winding up cable

Referring to Fig. 13, regarding the operation for winding up the cable, a user removes charging connector 150 from vehicle's inlet 400 (S210). Next, the user presses wind-up switch 156 mounted on charging connector 150 (S220). Cable conveyor 140 is then driven so that charging cable 160 starts being wound up (S230).

The wind-up spring provided in cable reel 210 causes cable reel 210 to rotate and thereby wind up charging cable 160 (S240). When charging cable 160 is wound up, the wind-up spring installed in cable reel 210 uniformly tensions charging cable 160, and cable conveyor 140 controls the speed at which the cable is wound up.

When charging cable 160 has been wound up to the extent that does not allow stopper ball 161 mounted on charging cable 160 to abut on opening 120H, wind-up switch 156 is released (S250). Thus, drive of cable conveyor 140 is stopped (S260). Under this condition as well, charging cable 160 is caught between cable feed pulley 141 and cable catch tensioning pulley 142 and thus firmly held therebetween (S270). Thus, charging cable 160 does not move.

As seen from the foregoing, charging cable housing device 100 in the present embodiment has cable reel 210 disposed in lower region 110 of casing 101. Since cable reel 210 is a heavy load, the center of gravity of charging cable housing device 100 is located relatively low, so that charging cable housing device 100 can be kept stable even when charging cable 160 is being pulled out.

In addition, cable reel 210 which is large in size is placed in lower region 110 of casing 101 so that charging cable housing device 100 is made stable and occupies no extra space.

Further, charging cable 160 is pulled out from upper region 120 of casing 101, and therefore, a user can handle charging connector 150 while standing. Accordingly, user's operability of charging connector 150 can be improved.

Furthermore, in casing 101, charging cable 160 is routed from cable reel 210 toward opening 120H, and therefore, a sufficient cable routing distance L5 can be ensured between cable reel 210 and the center of rotation of cable routing roller 300. In this way, charging cable 160 can be prevented from being entangled.

As seen from the above, in accordance with charging cable housing device 100 of the present embodiment, a charging cable housing device having an easy-to-use structure for use by a user can be provided.

It should be noted that charging cable 160 can also be pulled out manually. In this case, a pulling force is exerted on the top portion of casing 101. However, the configuration of the present application can be employed to minimize the possibility that charging cable housing device 100 falls down.

It should be construed that embodiments and examples disclosed herein are by way of illustration in all respects, not by way of limitation. It is intended that the scope of the present invention is defined by claims, not by the description above, and encompasses all modifications and variations equivalent in meaning and scope to the claims.

### REFERENCE SIGNS LIST

100 charging cable housing device; 101 casing; 101A internal space; 110 lower region; 111 foreign-matter discharge region; 120 upper region; 120H opening; 130 mount region; 140 cable conveyor; 141 drive cable feed pulley; 142 cable catch tensioning pulley; 143 forcing guide; 144 tension keeping spring; 145 drive motor; 146 first guide pulley; 147 second guide pulley; 150 charging connector; 155 pull-out switch; 156 wind-up switch; 161 stopper ball; 170 plug; 180 external cable; 181 slip ring; 200 power supply receptacle; 210 cable reel; 300 cable routing roller; 301, 302 roller; 301a, 302a rotational shaft; 301a, 302b rubber roller body; 303 base plate; 400 inlet

## Claims

1. A charging cable housing device configured to be portable and used for supplying electric power to a device-to-be-charged, comprising:
a charging connector (150) to be mounted in an inlet provided in said device-to-be-charged;
a casing (101) having an internal space (101A) and extending along a top-bottom direction;
a charging cable (160) housed in said internal space (101A) of said casing (101), and having one end which is extended outward from an opening (120H) provided in said casing (101) and to which said charging connector (150) is connected, and the other end from which electric power is supplied; and
a cable reel (210) housed in said internal space (101A) of said casing (101) and located lower than said opening (120H), with the other end of said charging cable (160) wound up around said cable reel.

2. The charging cable housing device according to claim 1, wherein
said casing (101) has an upper region (120) where said opening (120H) is provided and a lower region (110) where said cable reel (210) is provided, and
said lower region (110) has an outer shape configured to extend outward relative to an outer shape of said upper region (120).

3. The charging cable housing device according to claim 2, wherein
said casing (101) has a cylindrical shape, and
said lower region (110) has an outer diameter (φD1) larger than an outer diameter (φD2) of said upper region (120).

4. The charging cable housing device according to claim 1, further comprising a cable conveyor (140) provided in said internal space (101A) of said casing (101) and located higher than said cable reel (210) and causes said charging cable (160) to be fed or wound up.

5. The charging cable housing device according to claim 1, wherein a cable routing roller (200) is provided between said opening (120H) and said cable reel (210) and causes a tension to be generated on said charging cable (160) extended from said cable reel (210).

6. The charging cable housing device according to claim 1, wherein a mount region (130) on which said charging connector (150) is mounted is provided at a top of said casing (101).

7. The charging cable housing device according to claim 1, wherein a foreign-matter discharge region (111) in which foreign matters having entered said internal space (101A) are collected and from which said foreign matters are discharged outside is provided in a bottom end of said casing (101).
